Europäisches Patentamt

European Patent Office

Office européen des brevets

(11) Veröffentlichungsnummer: **0 1 1 1 080 B1**

(12) **EUROPÄISCHE PATENTSCHRIFT**

(45) Veröffentlichungstag der Patentschrift:
30.03.88

(51) Int. Cl.⁴: **C 04 B 35/71**, C 04 B 41/65, C 04 B 35/76, C 04 B 35/80

(21) Anmeldenummer: 83109693.8

(22) Anmeldetag: 28.09.83

(54) Verfahren zur Herstellung eines faserverstärkten keramischen Verbundwerkstoffes.

(30) Priorität: 08.12.82 DE 3245412

(43) Veröffentlichungstag der Anmeldung:
20.06.84 Patentblatt 84/25

(45) Bekanntmachung des Hinweises auf die Patenterteilung:
30.03.88 Patentblatt 88/13

(84) Benannte Vertragsstaaten:
AT BE CH DE FR GB IT LI LU NL SE

(56) Entgegenhaltungen:
WO - A - 79/00101
DE - A - 2 426 814
DE - B - 1 113 171
FR - A - 2 329 611

(73) Patentinhaber: Hutschenreuther AG, D-8672 Selb (DE)

(72) Erfinder: Müller-Zell, Axel, Dr., Plössberger Weg 14, D-8672 Selb (DE)
Erfinder: Hahn, Christoph, Dr., Bei der Linde 20, D-8672 Selb (DE)

(74) Vertreter: Patentanwälte Czowalla . Matschkur + Partner,
Dr.-Kurt-Schumacher-Strasse 23 Postfach 9109, D-8500 Nürnberg 11 (DE)

## Beschreibung

Die Erfindung richtet sich auf ein Verfahren zur Herstellung eines faserverstärkten keramischen Verbundwerkstoffes mit einer durchgehenden, gerichteten zweiten Phase.

Verfahren der genannten Art haben in den letzten Jahrzehnten eine zunehmende Bedeutung erlangt. Im Hinblick auf spezielle Einsatzgebiete und zu erbringende Eigenschaften werden durch die moderne Technik an Werkstoffe ständig steigende Forderungen gestellt. Da jedoch gleichzeitig auf dem Weltmarkt eine wachsende Verknappung von Rohstoffen, insbesondere von Metallen, zu verzeichnen ist, wird in steigendem Masse eine Substituierung solcher Werkstoffe durch Verbundwerkstoffe angestrebt. Verbundwerkstoffe mit verstärkenden Fasern nehmen dabei aufgrund günstiger Eigenschaften eine hervorragende Stellung ein. Der Einsatz von beispielsweise carbonfaserverstärkten Kunststoffen wird bereits im Grossflugzeugbau und im Motorenbau für ausgewählte Bauteile durchgeführt. Aus vielen Bereichen der Technik sind faserverstärkte Verbundwerkstoffe auf Kunststoff- oder Metallbasis nicht mehr wegzudenken.

Die Erfindung betrifft insbesondere ein Verfahren zur Herstellung eines faserverstärkten keramischen Verbundwerkstoffes. Solche Werkstoffe sind überall dort von Interesse, wo beispielsweise geringes Gewicht, verbunden mit hoher Festigkeit und Steifigkeit, verlangt wird.

In der DE-B-1 113 171 wird ein keramischer Verbundkörper mit verbesserten Festigkeitseigenschaften beschrieben, bei dem vor dem Brand zugfeste Einlagen in Form von Drähten, Fäden, Seilen, Rohren od. dgl. als Einlagen parallel untereinander und parallel zur Hauptlängsachse des keramischen Körpers eingebracht werden. In dem Grundkörper werden sie dann auf eine bleibende Zugvorspannung gebracht. Das Verfahren kennt verschiedene Möglichkeiten des Einbringens der Einlagen. Zum einen können diese mit der keramischen Grundmasse in das Mundstück einer Strangpresse einlaufen. Zum anderen sollen vor dem ersten Brand Bohrungen im keramischen Körper angebracht werden, die später die Einlagen aufnehmen. Dieses Verfahren geht erklärtermassen vom Grundgedanken der Spannbetontechnik aus, bei der ebenfalls die Einlagen im Grundkörper enthalten bleiben. In der DE-A-24 26 814 wird ein Werkstoff für prothetische Gegenstände offenbart, bei welchem flüchtige Fasern parallel zueinander in einen Graphitkörper eingebracht und dann wieder entfernt werden, um durchgehende Kanäle zu hinterlassen, in welche dann Knochenmaterial od. dgl. einwachsen soll. Ein planmässiges Ausfüllen der freigelegten Kanäle mit einem festen Werkstoff kommt bei dieser Sachlage nicht in Betracht.

In der DE-B-19 42 460 wird ein Verfahren zur Herstellung eines faserverstärkten Siliciumnitrid-Verbundwerkstoffes beschrieben, bei dem in eine erste Phase aus Silicium ein als zweite Phase dienendes inertes Fasermaterial oder Whiskermaterial aus Siliciumnitrid und Siliciumcarbid durch Spritzen eingebettet werden und sich das Silicium durch Sintern in Stickstoffatmosphäre in Siliciumnitrid umwandelt.

Die US-A-3 835 211 betrifft ein Verfahren zur Herstellung eines Verbundwerkstoffes, bei dem Siliciumnitridpulver mit Kohlenstoffasern vermischt wird. Die Kohlenstoffasern sind mit Siliciumcarbid beschichtet, um eine Reaktion der Matrix mit der Faser zu vermeiden und weisen ausserdem eine Siliciumnitridschicht auf, um eine Bindung mit der ersten Phase zu verbessern. Das Gemisch wird durch Heisspressen geformt.

Gemäss zweier weiterer Patentschriften wird durch Heisspressen ein Siliciumnitrid-Verbundwerkstoff mit gerichteten kontinuierlichen Tantaldrähten (US-A-3.900.626) bzw. mit Wolframfasern (US-A-3.914.500) hergestellt.

Die DE-B-26 48 459 betrifft ein Verfahren zur Herstellung eines mit durchgehenden Siliciumcarbid-Fasern verstärkten keramischen Werkstoffes. Die Fasermenge beträgt 10 bis 70 Vol.-%. Es ergibt sich ein Siliciumcarbid-faserverstärkter Siliciumcarbid-Verbundwerkstoff. Die DE-B-26 47 862 und die DE-A-30 45 523 betreffen Verfahren zur Herstellung eines Verbundwerkstoffes auf Faserbasis aus Siliciumcarbid und Silicium. Es werden Fasern oder Fasergewebe aus Siliciumcarbid mit Silicium infiltriert.

Bei allen oben genannten Verfahren erweist es sich jedoch als nachteilig, dass die zweite Phase bildende Fasern mittels mechanischer Vermischung in die erste Phase, in den genannten Fällen ein keramisches Pulver, eingebracht werden. Dabei besteht die Gefahr, dass die Fasern zerstört werden und so ihre Wirksamkeit stark beeinträchtigt wird; ein gerichtetes Einbringen der Fasern ist bei den genannten Verfahren nicht möglich. Daher können die so hergestellten Verbundwerkstoffe den gewachsenen Ansprüchen an Festigkeit und Thermoschock-Unempfindlichkeit nicht mehr Rechnung tragen. Auch das Infiltrieren lockerer Formkörper aus Fasergeweben schafft keine Verbundwerkstoffe, die den gestiegenen Anforderungen gewachsen sind, und bringt somit keine Abhilfe.

Die Erfindung stellt sich daher zur Aufgabe, ein Verfahren der eingangs genannten Art so weiterzubilden, dass aufgrund dieses Verfahrens hergestellte Verbundwerkstoffe eine hohe Festigkeit, Bruchzähigkeit und gutes Thermoschockverhalten aufweisen. Die Aufgabe wird erfindungsgemäss dadurch gelöst, dass in der ersten Phase des Verbundwerkstoffes durchgehende, gerichtete Kanäle erzeugt werden und in diese Kanäle ein als zweite Phase dienender Werkstoff eingebracht wird, wobei zum Erzeugen der Kanäle durchgehende, gerichtete Fasern oder Fasergebilde aus einem nahezu rückstandslos entfernbaren Material in das Ausgangsmaterial der ersten Phase eingebracht werden, diese Fasern oder Fasergebilde anschliessend durch thermische oder chemische Behandlung entfernt und in die entstehenden Kanäle nach einer Temperaturbehandlung der als zweite Phase dienende Werkstoff oder ein Vormaterial zur Ausbildung der zweiten Phase eingebracht wird. Dieses Verfahren ist vorteilhafterweise unabhängig von einer verstärkenden Phase im herkömmlichen Sinne und deren hohen Herstellungskosten. Er ermöglicht eine weitgehende Freiheit bei der Auswahl des als zweite Phase dienenden, in die durchgehenden, gerichteten Kanäle einzubringenden Werkstoffes, so dass Eigenschaften des Verbundwerkstoffes, wie beispielsweise Festigkeit, Bruchzähigkeit oder Wärmeleitfähigkeit, gezielt verbessert oder eingestellt werden können. Die gerichteten Fasern oder Fasergebilde werden zumindest nahezu rückstandlos aus der ersten Phase entfernt. Von besonderem Vorteil ist es dabei, dass dieses Material, da es ja lediglich als vorübergehender «Platzhalter» dient, nicht den hohen und somit in der Regel kostenintensiven Anforderungen an den als zweite Phase dienenden Werkstoff zu genügen braucht.

Vorzugsweise besteht das entfernbare Material aus durchgehenden Fasern, Faserstapeln, Faserbündeln, Fasernetzen, Faserschichten oder Fasergeweben. Dadurch lassen sich, je nach Verwendungszweck und gewünschten Eigenschaften für den Verbundwerkstoff, durchgehende, gerichtete Kanäle auch komplizierter Strukturen auf vorteilhaft einfache Weise erzeugen. Das entfernbare Material besteht dabei vorzugsweise aus mineralischen, metallischen, textilen, natürlichen oder Kunststoffasern oder Fasern auf Glasbasis und wird vorzugsweise durch thermische oder chemische Behandlung entfernt. Beispielsweise werden Kohlenstoff-, Seide- oder Kunststoffasern gerichtet in ein sinterfähiges Siliciumcarbid- oder Siliciumnitridpulver eingebracht und als Gemisch unter Druck in einer isostatischen Presse zu einem Formkörper gebildet. Die Fasern können unterschiedliche Durchmesser/Längenverhältnisse aufweisen. Die Fasern werden dann aus dem Formkörper oxidierend ausgebrannt, und anschliessend wird der Formkörper gesintert. Eine umgekehrte Reihenfolge ist ebenfalls möglich: der Formkörper wird zunächst unter Schutzgas bei Temperaturen von 1200 bis 2300 °C gesintert, anschliessend werden Fasern, wie beispielsweise Kohlenstoffasern, die sich noch nicht zersetzt haben, oxidierend ausgebrannt. Anstelle der obengenannten Fasern verwendete Glasfasern werden entsprechen durch Ausschmelzen oder Säurebehandlung entfernt. Je nach der Kombination der vorgesehenen Werkstoffe ist gegebenenfalls ein Entfernen des die Kanäle bildenden Materials durch chemische Behandlung von Vorteil.

Die erste Phase des Verbundwerkstoffes besteht bevorzugt aus einem keramischen Sinterwerkstoff, insbesondere aus einem Oxid oder Oxidgemisch, einem Carbid oder Carbidgemisch, einem Nitrid oder Nitridgemisch, einem Borid oder Boridgemisch, einem Silikat oder Silikatgemisch oder deren Gemischen untereinander. In den keramischen Werkstoff, der in der Regel pulverförmig oder als Schlicker vorliegt, werden erfindungsgemäss durchgehende, gerichtete Fasern oder Fasergebilde aus beispielsweise organischem, rückstandlos ausheizbarem Material

eingebracht. Diese werden sodann ausgebrannt und bilden somit die gerichteten, durchgehenden Kanäle, in die der als zweite Phase dienende Werkstoff eingebracht wird. Soll der herzustellende Verbundwerkstoff im Hochtemperaturbereich Verwendung finden, so besteht der keramische Sinterwerkstoff vorzugsweise aus Carbiden oder Nitriden oder deren Gemischen, insbesondere jedoch aus Siliciumcarbid, Siliciumnitrid oder deren Gemischen.

In Weiterbildung des Erfindungsgedankens wird der als zweite Phase dienende Werkstoff durch Tränken oder Infiltrieren, drucklos, unter Druck oder unter Vakuum, kalt oder heiss in die Kanäle eingebracht. Dabei kann er beispielsweise pastös oder flüssig sein. Es versteht sich, dass der als zweite Phase dienende Werkstoff gegenüber der ersten Phase ein entsprechendes, gegebenenfalls durch affinitätssteigernde Zusätze erhöhtes Benetzungsverhalten aufweisen muss. Der Volumenanteil des als zweite Phase dienenden Werkstoffes an dem Gesamtvolumen des Verbundwerkstoffes beträgt vorzugsweise 10 bis 90%.

Bevorzugt ist der als zweite Phase dienende Werkstoff ein Metall oder eine Metallegierung, beispielsweise ein schmelzflüssiges Metall wie Silicium, ein Oxid oder ein Oxidgemisch, beispielsweise eine oxidische Schmelze oder ein Schmelzgemisch, beispielsweise Boroxid oder Siliciumdioxid, ein carbidhaltiger oder, wie beispielsweise Silicium, carbidbildender Werkstoff oder ein nitridhaltiger oder, wie beispielsweise unter Stickstoffatmosphäre wiederum Silicium, aber auch Aluminium oder Titan, nitridbildender Werkstoff.

Die nach dem erfindungsgemässen Verfahren hergestellten Verbundwerkstoffe lassen sich heissisostatisch unter entsprechenden Bedingungen nachverdichten, wodurch gleichzeitig ein noch innigerer Kontakt zu dem als zweite Phase dienenden Werkstoff erzielt wird.

**Patentansprüche**

1. Verfahren zur Herstellung eines faserverstärkten keramischen Verbundwerkstoffes mit einer durchgehenden, gerichteten zweiten Phase, dadurch gekennzeichnet, dass in der ersten Phase des Verbundwerkstoffes durchgehende, gerichtete Kanäle erzeugt werden und in diese Kanäle ein als zweite Phase dienender Werkstoff eingebracht wird, wobei zum Erzeugen der Kanäle durchgehende, gerichtete Fasern oder Fasergebilde aus einem nahezu rückstandlos entfernbaren Material in das Ausgangsmaterial der ersten Phase eingebracht werden, diese Fasern oder Fasergebilde anschliessend durch thermische oder chemische Behandlung entfernt und in die entstehenden Kanäle nach einer Temperaturbehandlung der als zweite Phase dienende Werkstoff oder ein Vormaterial zur Ausbildung der zweiten Phase eingebracht wird.

2. Verfahren nach Anspruch 1, dadurch gekennzeichnet, dass das entfernbare Material aus durchgehenden Fasern, Faserstapeln, Faserbündeln, Fasernetzen, Faserschichten oder Fasergeweben besteht.

3. Verfahren nach Anspruch 1 oder 2, dadurch gekennzeichnet, dass das entfernbare Material aus mineralischen, metallischen, textilen, natürlichen oder Kunststoffasern oder Glasfasern besteht.

4. Verfahren nach einem der Ansprüche 1 bis 3, dadurch gekennzeichnet, dass die erste Phase des Verbundwerkstoffes aus einem keramischen Sinterwerkstoff, insbes. aus einem Oxid oder Oxidgemisch, einem Carbid oder Carbidgemisch, einem Nitrid oder Nitridgemisch, einem Borid oder Boridgemisch, einem Silikat oder Silikatgemisch oder deren Gemischen untereinander besteht.

5. Verfahren nach Anspruch 4, dadurch gekennzeichnet, dass der Sinterwerkstoff aus Siliciumcarbid, Siliciumnitrid oder deren Gemischen besteht.

6. Verfahren nach einem der Ansprüche 1 bis 5, dadurch gekennzeichnet, dass der als zweite Phase dienende Werkstoff durch Tränken oder Infiltrieren, drucklos, unter Druck oder unter Vakuum, kalt oder heiss in die Kanäle eingebracht wird.

7. Verfahren nach einem der Ansprüche 1 bis 6, dadurch gekennzeichnet, dass der Volumenanteil des als zweite Phase dienenden Werkstoffes an dem Gesamtvolumen des Verbundwerkstoffes 10 bis 90% beträgt.

8. Verfahren nach einem der Ansprüche 1 bis 7, dadurch gekennzeichnet, dass der als zweite Phase dienende Werkstoff ein Metall oder eine Metall-Legierung ist.

9. Verfahren nach einem der Ansprüche 1 bis 8, dadurch gekennzeichnet, dass der als zweite Phase dienende Werkstoff ein Oxid oder Oxidgemisch ist.

10. Verfahren nach einem der Ansprüche 1 bis 9, dadurch gekennzeichnet, dass der als zweite Phase dienende Werkstoff ein carbidhaltiger oder carbidbildender Werkstoff ist.

11. Verfahren nach einem der Ansprüche 1 bis 10, dadurch gekennzeichnet, dass der als zweite Phase dienende Werkstoff ein nitridhaltiger oder nitridbildender Werkstoff ist.

12. Verfahren nach einem der Ansprüche 1 bis 11, dadurch gekennzeichnet, dass die hergestellten Verbundwerkstoffe durch heissisostatisches Pressen nachverdichtet werden.

## Claims

1. A method of producing a fibre-reinforced ceramic composite material having a continuous directional second phase, characterised in that continuous directional passages are produced in the first phase and a material serving as a second phase is introduced into these passages, while in order to produce the passages, continuous directional fibres or fibrous structures of a material which can be removed almost without any residue are introduced into the starting material of the first phase, these fibres or fibrous structures are then removed by thermal or chemical treatment and the material serving as the second phase or an initial material for forming the second phase is introduced into the resulting passages, after a temperature treatment.

2. A method according to Claim 1, characterised in that the removable material consists of continuous fibres, stacks of fibres, bundles of fibres, fibre nets, layers of fibres or fibrous fabric.

3. A method according to Claim 1 or 2, characterised in that the removable material consists of mineral, metallic, textile, natural or synthetic fibres or glass fibres.

4. A method according to one of the Claims 1 to 3, characterised in that the first phase of the composite material consists of a ceramic sintered material, particularly of an oxide or oxide mixture, a carbide or carbide mixture, a nitride or nitride mixture, a boride or boride mixture, a silicate or silicate mixture or mixtures of these with one another.

5. A method according to Claim 4, characterised in that the sintered material consists of silicon carbide, silicon nitride or mixtures thereof.

6. A method according to one of the Claims 1 to 5, characterised in that the material serving as the second phase is introduced into the passages by soaking or infiltration, without pressure, under pressure or under vacuum, cold or hot.

7. A method according to one of the Claims 1 to 6, characterised in that the proportion by volume of the material serving as the second phase to the total volume of the composite material is 10 to 90%.

8. A method according to one of the Claims 1 to 7, characterised in that the material serving as the second phase is a metal or a metal alloy.

9. A method according to one of the Claims 1 to 8, characterised in that the material serving as the second phase is an oxide or an oxide mixture.

10. A method according to one of the Claims 1 to 9, characterised in that the material serving as the second phase is a material containing carbide or forming carbide.

11. A method according to one of the Claims 1 to 10, characterised in that the material serving as the second phase is a material containing nitride or forming nitride.

12. A method according to one of the Claims 1 to 11, characterised in that the composite materials produced are redensified by hot isostatic pressing.

## Revendications

1. Procédé pour fabriquer un matériau céramique composite renforcé par des fibres, comportant une seconde phase orientée continue, caractérisé en ce qu'on produit des canaux continus orientés dans la première phase du matériau composite et qu'on insère, dans ces canaux, un matériau constituant une seconde phase, auquel cas pour produire les canaux, on insère des fibres ou une structure fibreuse orientée continue constituée en un matériau pouvant être éliminé presque sans résidu, dans le matériau de départ de la première phase, on élimine ensuite ces fibres ou cette structure fibreuse au moyen d'un traitement thermique ou chimique et, après un traitement thermique, on insère dans les canaux obtenus le matériau utilisé en tant que seconde phase ou un matériau de départ pour former la seconde phase.

2. Procédé selon la revendication 1, caractérisé en ce que le matériau pouvant être éliminé est constitué par des fibres continues, des empilages de fibres, des faisceaux de fibres, des réseaux de fibres, des couches de fibres ou des tissus fibreux.

3. Procédé selon la revendication 1 ou 2, caractérisé en ce que le matériau pouvant être éliminé est constitué par des fibres minérales, métalliques, textiles, naturelles ou synthétiques ou par des fibres de verre.

4. Procédé selon l'une des revendications 1 à 3, caractérisé en ce que la première phase du matériau composite est constituée par un matériau céramique fritté, notamment par un oxyde ou un mélange d'oxydes, un carbure ou un mélange de carbures, un nitrure ou un mélange de nitrures, un borure ou un mélange de borures, un silicate ou un mélange de silicates, ou des mélanges de ces constituants.

5. Procédé selon la revendication 4, caractérisé en ce que le matériau fritté est constitué par du carbure de silicium, du nitrure de silicium ou des mélanges de ces constituants.

6. Procédé selon l'une des revendications 1 à 5, caractérisé en ce qu'on insère dans les canaux le matériau utilisé comme seconde phase, par imprégnation ou infiltration, sans pression, sous pression ou sous vide, à froid ou à chaud.

7. Procédé selon l'une des revendications 1 à 6, caractérisé en ce que le pourcentage en volume du matériau constituant la seconde phase, rapporté au volume global du matériau composite, est compris entre 10 et 90%.

8. Procédé selon l'une des revendications 1 à 7, caractérisé en ce que le matériau utilisé comme seconde phase est un métal ou un alliage métallique.

9. Procédé selon l'une des revendications 1 à 8, caractérisé en ce que le matériau utilisé comme seconde phase est un oxyde ou un mélange d'oxydes.

10. Procédé selon l'une des revendications 1 à 9, caractérisé en ce que le matériau utilisé comme seconde phase est un matériau contenant ou formant des carbures.

11. Procédé selon l'une des revendications 1 à 10, caractérisé en ce que le matériau utilisé comme seconde phase est un matériau contenant ou formant des nitrures.

12. Procédé selon l'une des revendications 1 à 11, caractérisé en ce qu'on fait subir aux matériaux composites fabriqués une densification supplémentaire par compression isostatique à température élevée.